# EUROPÄISCHE PATENTSCHRIFT

(11) **EP 3 789 625 B1**
(45) Veröffentlichungstag und Bekanntmachung des Hinweises auf die Patenterteilung: **11.01.2023**
(21) Anmeldenummer: 19195930.3
(22) Anmeldetag: 06.09.2019
(51) Int. Cl.: F16D 1/08, F16D 1/108

(54) **FLANSCHANORDNUNG, GETRIEBE, ELEKTROMOTOR, WINDKRAFTANLAGE UND INDUSTRIE-APPLIKATION**
FLANGE ARRANGEMENT, GEARBOX, ELECTRIC MOTOR, WIND POWER STATION AND INDUSTRIAL APPLICATION
AGENCEMENT DE BRIDE, TRANSMISSION, MOTEUR ÉLECTRIQUE, ÉOLIENNE ET APPLICATION INDUSTRIELLE

(43) Veröffentlichungstag der Anmeldung: 10.03.2021
(73) Patentinhaber: Flender GmbH, 46395 Bocholt (DE)
(72) Erfinder: Schroer, Dirk, 46414 Rhede (DE)
(74) Vertreter: Michalski Hüttermann & Partner Patentanwälte mbB

(56) Entgegenhaltungen:
- WO-A1-2017/148481
- AT-A2- 506 645
- DE-A1-102009 019 435
- US-A- 4 274 755

## Beschreibung

Die Erfindung betrifft eine Flanschanordnung, eine entsprechende Flanschnabe und eine entsprechendes Arretierungsmittel. Die Erfindung betrifft auch Ein Getriebe und einen Elektromotor, die über eine entsprechende Flanschverbindung verfügen. Ebenso betrifft die Erfindung einen Antriebsstrang einer Windkraftanlage, eine entsprechende Windkraftanlage und eine Industrie-Applikation, die mit einer entsprechenden Flanschanordnung ausgestattet sind.

Aus der Broschüre "Pure Energie - effizient und zuverlässig - Planurex 3: Die Antriebslösung für Ihre Zuckerrohrmühle mit Individualantrieb", Artikelnummer PDMD-B10121-00 der Flender GmbH ist das Getriebe Planurex 3 bekannt, das in Zuckermühlen einsetzbar ist. Das Getriebe Planurex 3 verfügt über eine Abtriebswelle, die über einen Flansch mit der Zuckermühle verbunden ist.

Aus der Druckschrift DE 10 2013 200 911 A1 ist eine Ausrückvorrichtung bekannt, die für eine Kupplung eines Kraftfahrzeugs geeignet ist. Die Ausrückvorrichtung umfasst einen ringförmigen Flansch, der als Auflager für ein Betätigungselement ausgebildet ist und mittels einer Bajonettverbindung an einem Gehäuse festgelegt ist.

Aus AT 506 645 A2 ist eine Wellenverbindung bekannt, die eine Leistungswelle, eine damit lösbar verbundene Flanschnabe und ein Arretierungsmittel, das zu einem lösbaren Halten der Flanschnabe an der Leistungswelle ausgebildet ist, aufweist.

Aus DE 10 2009 019435 A1 ist eine Wellenverbindung bekannt, bei der mit Hilfe eines Spengrings ein Gelenkwinkelteil einer Welle ausgerückt wird.

In unterschiedlichen technischen Gebieten werden Flanschordnungen eingesetzt, über die eine Antriebsleistung von einer Welle über einen Flansch an eine Maschine übertragen wird. In vielen Anwendungsbereichen besteht die Anforderung, immer höhere Antriebsleistungen zu übertragen. Ferner werden steigende Anforderungen an die Wartungs- und Reparaturfreundlichkeit derartiger Anbindungen gestellt. Gleichzeitig besteht die Zielsetzung, derartige Anbindungen schnell und kosteneffizient herzustellen. Es besteht deshalb Bedarf an einer Flanschanordnung zur Übertragung von Antriebsleistung, die in zumindest einem der skizzierten Aspekte eine Verbesserung bietet.

Die Aufgabenstellung wird durch die erfindungsgemäße Flanschanordnung gelöst. Die Flanschanordnung umfasst eine Leistungswelle, über die eine Antriebsleistung übertragen wird. Die Leistungswelle kann dazu beispielweise als eine Antriebswelle oder Abtriebswelle ausgebildet sein. Die Flanschanordnung umfasst auch eine Flanschnabe, die drehmomentübertragend mit der Leistungswelle koppelbar ist. Die Flanschnabe weist an einem der Leistungswelle abgewandten Bereich einen Flansch auf, über den die Antriebsleistung von der Leistungswelle beispielsweise an eine Maschine übertragbar ist. In einem montierten Zustand ist die Flanschnabe lösbar mit der Leistungswelle verbunden. Dazu umfasst die Flanschanordnung ein Arretierungsmittel, das beispielweise als Haltering ausgebildet sein kann, und dazu ausgebildet ist, die Flanschnabe formschlüssig an der Leistungswelle zu halten und so auf die Flanschnabe eine Haltekraft auszuüben. Das Arretierungsmittel kann beispielsweise durch lösbare Befestigungsmittel an der Flanschnabe lösbar befestigt sein. Erfindungsgemäß ist das Arretierungsmittel auch zu einem Ausüben einer Demontagekraft ausgebildet, die der Haltekraft im Wesentlichen entgegengerichtet ist. Dazu ist das Arretierungsmittel drehbar um eine Drehachse der Leistungswelle ausgebildet. Das Arretierungsmittel ist dementsprechend zwischen einer Haltestellung, in der die Haltekraft ausübbar ist, und einer Demontagestellung, in der die Demontagekraft ausübbar ist, drehbar ausgebildet.

Die Haltekraft ist hierbei nur in der Haltestellung und die Demontagekraft nur in der Demontagestellung ausübbar.

Das Arretierungsmittel kann folglich sowohl bei einer Montage als auch einer Demontage zur Ausübung der erforderlichen Kräfte, also der Haltekraft und der Demontagekraft, eingesetzt werden. Das Arretierungsmittel ist auch in einem montierten Zustand der Flanschanordnung zugänglich, so dass die Montage und Demontage einfach durchführbar sind. Insbesondere bei einer Demontage der Flanschanordnung wird der Bedarf an Hilfsvorrichtungen reduziert. Die erfindungsgemäße Flanschanordnung kommt mit einer reduzierten Anzahl an Komponenten aus und bietet so die Möglichkeit einer kosteneffizienten und schnellen Demontage. Die erfindungsgemäße Flanschanordnung ist ferner kompakt ausgebildet und erlaubt eine platzsparende Montage und Demontage.

Erfindungsgemäß ist vorgesehen, dass am Arretierungsmittel zumindest ein radial nach außen stehendes Abstützsegment ausgebildet ist, wobei ein solches Abstützsegment beispielsweise als Ringsegment an ein als Haltering ausgebildetes Arretierungsmittel angeformt sein kann, und/oder an der Flanschnabe ein radial nach innen stehendes Abstützsegment ausgebildet ist, wobei ein solchen Abstützsegment beispielsweise an die Flanschnabe angeformt sein kann. Durch die Segmentform der Abstützsegmente können zwischen diesen lichte Bereiche ausgebildet sein, die ein gegenseitiges Passieren der Abstützsegmente der Flanschnabe und des Arretierungsmittels in einer geeigneten Drehstellung erlauben. Hierzu können auch mehrere Abstützsegmente an der Flanschnabe und/oder am Arretierungsmittel ausgebildet sein. Derartige Abstützsegmente bieten ein ausreichendes Spiel um ein Passieren des Arretierungsmittels durch die Flanschnabe zu erlauben. Dazu kann das Arretierungsmittel gegossene Konturen, also Rohflächen, aufweisen.

In einer Ausführungsform der beanspruchten Flanschanordnung ist die Demontagekraft, die auf die Flanschnabe ausgeübt wird, axial, also entlang der Drehachse der Leistungswelle, ausgerichtet. Dementsprechend ist die Demontagekraft derart ausgerichtet, die Flanschnabe von der Leistungswelle abzuziehen. Aufgrund der entgegengerichteten Ausrichtung der Demontagekraft und der Haltekraft, ist das Arretierungsmittel nur zu einem Ausüben einer Axialkraft ausgebildet. Komplexe Arretierungsmittel, die auch in eine Umfangsrichtung der Leistungswelle und der Flanschnabe Kräfte ausüben, sind folglich in der beanspruchten Lösung entbehrlich. Demnach kann das Arretierungsmittel beispielweise als Haltering ausgebildet sein, der wiederum wirtschaftlich und schnell herstellbar ist. Ferner wird durch eine Demontagekraft, die entlang der Drehachse der Leistungswelle ausgerichtet ist, eine Demontage vereinfacht, da die Bewegung der Flanschnabe beim Demontieren im Wesentlichen frei von Richtungsänderungen ist. Die beanspruchte Lösung erfordert keine zusätzlichen Flächen zum Abdrücken und ein Verkanten von Komponenten wird vermieden. Zusätzliche mechanische Beanspruchungen an der Flanschnabe oder an der Leistungswelle werden infolgedessen vermieden. Dadurch kommt die beanspruchte Flanschanordnung bei der Montage oder Demontage auch mit einfacherem Werkzeug aus, da keine gesteigerten Kräfte aufzubringen sind um entsprechende verkantete Komponenten zu lösen.

Darüber hinaus kann das Arretierungsmittel derart ausgebildet sein, dass eine Stirnseite des Arretierungsmittels, die der Leistungswelle zugewandt ist, zu einem Ausüben der Haltekraft auf die Flanschnabe ausgebildet ist. Korrespondierend hierzu ist die Stirnseite des Arretierungsmittels, die der Leistungswelle abgewandt ist, zum Ausüben der Demontagekraft ausgebildet. Unter der der Stirnseite abgewandten Seite des Arretierungsmittels ist dabei die Seite zu verstehen, die in Richtung eines freien Endes der Leistungswelle zeigt. Dementsprechend dient eine Stirnseite des Arretierungsmittels dazu, beispielsweise durch Ausüben einer Stützkraft, die Haltekraft für die Flanschnabe bereitzustellen und eine andere Stirnseite dazu, beispielsweise durch Ausüben einer Stützkraft, die Demontagekraft bereitzustellen. Das Ausüben der Haltekraft mittels einer Stirnseite des Arretierungsmittels erlaubt es, zwischen der Flanschnabe und dem Arretierungsmittel einen statisch überbestimmten Zustand zu vermeiden, der beispielsweise bei aufwändigen Verschraubungen entstehen kann. Derartige überbestimmte Zustände sind anfällig für ein Versagen in Reaktion auf Wechsellasten. Dieser technische Nachteil wird durch die beanspruchte Flanschanordnung daher vermieden. Gleichzeitig kann so im montierten Zustand ein Spiel zwischen der Flanschnabe und dem Arretierungsmittel reduziert werden. Das Ausüben der Demontagekraft und der Haltekraft kann somit nur durch Bereiche der jeweiligen Stirnseite erfolgen. Dadurch wird insgesamt eine Funktionstrennung an den Oberflächen des Arretierungsmittels verwirklicht. Die Stirnseiten bzw. deren entsprechende Bereiche und/oder korrespondierende Kontaktbereiche der Flanschnabe können dadurch in einfacher Weise zweckmäßig angepasst werden. Beispielsweise können Oberflächen aufgeraut ausgebildet werden um bei einer Demontage einem Verrutschen der Flanschnabe gegenüber dem Arretierungsmittel entgegenzuwirken.

Des Weiteren kann das Arretierungsmittel zwischen einer Halteposition und einer Demontageposition drehbar ausgebildet sein. Ein dementsprechendes Drehen erfolgt dabei um die Drehachse der Leistungswelle. Die Demontageposition liegt vor, wenn die Abstützsegmente des Arretierungsmittels und der Flanschnabe sind in Axialrichtung gegenüberliegen, so dass durch ein Abstützsegment des Arretierungsmittels eine Stützkraft auf ein Abstützsegment der Flanschnabe ausübbar ist. Unter einer Halteposition ist ferner jegliche Positionierung des Arretierungsmittels zu verstehen, in der dieses in die Flanschanordnung montierbar ist. Das Arretierungsmittel weist ein reduziertes Gewicht auf und ist entsprechend leicht in der Handhabung. Ein Drehen des Arretierungsmittels ist mit reduziertem Aufwand möglich, so dass ein Demontagevorgang weiter vereinfacht wird. Ein einfaches Drehen kann ferner dadurch gewährleistet werden, dass im Bereich der Innenseite der Flanschnabe für das Arretierungsmittel hinreichend axiales Spiel ausgebildet ist.

Ferner kann an der Flanschnabe und/oder der Leistungswelle eine Kurzverzahnung ausgebildet sein, durch die zwischen diesen eine Drehung übertragbar ist. Eine Kurzverzahnung ist mit einem reduzierten Aufwand herstellbar und bietet in Umfangsrichtung ein einstellbares Spiel, durch das die Flanschnabe wiederum einfach mit einer mechanischen Anwendung verbindbar ist. Insbesondere erlaubt es die beanspruchte Flanschordnung also, unter Beibehaltung eines Spiels in Umfangsrichtung zwischen der Flanschnabe und dem Arretierungsmittel, zwischen diesen das Spiel in Axialrichtung zu reduzieren. Alternativ kann zwischen der Flanschnabe und der Leistungswelle auch ein Kegelsitz, ein zylindrischer Presssitz oder als Welle-Nabe-Verbindung mit einer Passfederverbindung ausgebildet sein. Die beanspruchte Lösung ist somit auf eine breite Spanne an Einsatzzwecken anpassbar.

In einer weiteren Ausführungsform der beanspruchten Flanschanordnung kann die Demontagekraft durch mindestens ein Befestigungsmittel auf die Flanschnabe ausgebildet werden. Das Befestigungsmittel kann dazu im Arretierungsmittel aufgenommen sein. Das Befestigungsmittel kann als lösbares Befestigungsmittel, beispielsweise als Schraube, ausgebildet sein. Ein solches Befestigungsmittel kann durch ein Gewinde durch das Arretierungsmittel geführt werden und sich an einer Stirnseite der Leistungswelle abstützen. Wenn sich das Arretierungsmittel in einer Demontageposition befindet, wird eine vom mindestens einen Befestigungsmittel auf die Leistungswelle ausgeübte Stützkraft auf das Arretierungsmittel übertragen, das sich hierum an der Flanschnabe abstützt. Dadurch wird, ausgehend vom mindestens einen Befestigungsmittel, über das Arretierungsmittel die Demontagekraft hervorgerufen, die auf die Flanschnabe einwirkt. Hierdurch kann die Flanschnabe von der Leistungswelle abgezogen werden. Je nach Anforderung, beispielsweise dem Gewicht der Flanschnabe, können auch mehrere Befestigungsmittel im Arretierungsmittel angeordnet sein. Beispielweise können im Arretierungsmittel mehrere Bohrungen mit geeigneten Bewegungsgewinden für entsprechende Schrauben ausgebildet sein. Derartige Befestigungsmittel können als standardisierte Komponenten ausgebildet sein, die eine hohe Verfügbarkeit und Wirtschaftlichkeit bieten.

Darüber hinaus kann die Leistungswelle als Vollwelle oder als Hohlwelle ausgebildet sein. Die beanspruchte Flanschanordnung ist sowohl für Vollwellen als auch Hohlwellen geeignet und erlaubt es die skizzierte Lösung, auf Leistungswellen unterschiedlicher Leistungskategorien anzuwenden. Je höher die Leistungskategorie, und je größer die Flanschnabe der beanspruchten Flanschanordnung ist, umso stärker treten die oben beschriebenen Vorteile hervor. Die beanspruchte Lösung erfordert nur ein Minimum an Stirnfläche an der Leistungswelle, an der die Stützkraft zum Hervorrufen der Demontagekraft einzuleiten ist. Die beanspruchte Flanschanordnung kann deshalb auch bei relativ dünnwandigen Hohlwellen eingesetzt werden. Die Konstruktion einer Hohlwelle wird bei der beanspruchten Flanschanordnung nicht durch das Erfordernis einer großen Abstützfläche bestimmt. Dies erlaubt es, die mechanische Leistungsfähigkeit einer Hohlwelle besser auszunutzen.

Die beschriebene Aufgabenstellung wird auch durch die erfindungsgemäße Flanschnabe gelöst. Die Flanschnabe umfasst einen Flanschabschnitt, der mit einem Maschinenflansch verbindbar ist. Der Flanschabschnitt ist mit einem Zylinderabschnitt verbunden, beispielsweise an diesen angeformt. Der Zylinderabschnitt ist auf eine Leistungswelle aufschiebbar. Der Zylinderabschnitt ist mit einer Kurzverzahnung versehen, die auf einer Innenseite des Zylinderabschnitts ausgebildet ist. Des Weiteren verfügt die Flanschnabe über eine Stützschulter, die zu einem axialen Abstützen der Flanschnabe an der Leistungswelle ausgebildet ist. Die Stützschulter kann beispielsweise ein umlaufender Vorsprung an einer Innenseite der Flanschnabe sein. Alternativ kann die Stützschulter auch mehrere in Umfangsrichtung voneinander beabstandete Vorsprünge umfassen. Die Flanschnabe ist erfindungsgemäß derart ausgebildet, dass sie als Flanschnabe in einer Flanschanordnung gemäß einer der oben skizzierten Ausführungsformen einsetzbar ist. Die Flanschnabe gehört also zu einer Flanschanordnung nach einer der beschriebenen Ausführungsformen. Ein solche Flanschnabe weist eine relativ einfache Geometrie auf, ist dementsprechend kosteneffizient herzustellen und erlaubt eine schnelle Demontage einer solchen Flanschanordnung.

Gleichermaßen wird die dargestellte Aufgabenstellung durch das erfindungsgemäße Arretierungsmittel gelöst. Das Arretierungsmittel weist einen Ringkörper auf, der mit einer Mehrzahl an Ausnehmungen versehen ist. Die Ausnehmungen sind jeweils zum Aufnehmen eines lösbaren Befestigungsmittels ausgebildet. Dazu können in den Ausnehmungen beispielsweise Bewegungsgewindet ausgebildet sein und die lösbaren Befestigungsmittel als entsprechende Schrauben ausgebildet sein. Das Arretierungsmittel gehört zu einer Flanschanordnung. Erfindungsgemäß gehört das Arretierungsmittel zu einer Flanschanordnung gemäß einer der oben skizzierten Ausführungsformen. Ein derartiges Arretierungsmittel bietet dadurch, dass es auch zum Ausüben einer Demontagekraft geeignet ist, eine verstärkte Funktionsintegration.

Ebenso wird die Aufgabenstellung durch ein Getriebe gelöst, das eine Leistungswelle aufweist, die als Antriebswelle oder Abtriebswelle ausgebildet ist. Das Getriebe verfügt auch über eine Flanschnabe, die auf der Leistungswelle anbringbar ist. Das Getriebe kann dabei beispielsweise als Planetengetriebe, Stirnradgetriebe, Kegelradgetriebe, Schneckengetriebe oder Hypoidgetriebe ausgebildet sein. Die Leistungswelle gehört zu einer Flanschanordnung, durch die eine über die Leistungswelle transportierte Antriebsleistung auf eine Maschine übertragbar ist. Die Flanschanordnung ist dabei gemäß einer der oben beschriebenen Ausführungsformen ausgebildet. Die technischen Vorteile der Flanschanordnung treten bei einem Getriebe, über das häufig hohe Antriebsleistungen übertragen werden, in besonderer Form hervor. Insbesondere wird so die Wartung des Getriebes vereinfacht. Dadurch können beispielsweise bei einer Industrie-Applikation oder einer Windkraftanlage Ausfallzeiten reduziert werden.

Die skizzierte Aufgabenstellung wird genauso durch den erfindungsgemäßen Elektromotor gelöst. Der Elektromotor weist eine Abtriebswelle auf, über die Antriebsleistung abgebbar ist. Die Abtriebswelle dient als Leistungswelle, die mit einer Flanschnabe versehen ist. Die Flanschnabe und die Leistungswelle gehören dabei zu einer Flanschanordnung, die nach einer der oben dargestellten Ausführungsformen ausgebildet ist. Auch bei einem Elektromotor können die technischen Vorteile der beanspruchten Lösung in besonders starker Weise genutzt werden.

Genauso wird die zugrundeliegende Aufgabenstellung durch den erfindungsgemäßen Antriebsstrang einer Windkraftanlage gelöst, der eine Rotorwelle umfasst, die mit einem Rotor der Windkraftanlage verbindbar ist. Der Antriebsstrang umfasst ferner ein Getriebe, das drehmomentübertragend mit der Rotorwelle verbunden ist. Das Getriebe wiederum ist drehmomentübertragend mit einem Generator verbunden, der auch zum Antriebsstrang gehört. Zumindest eine der Verbindungen zwischen dem Getriebe und dem Generator und/oder der Rotorwelle ist dabei als Flanschanordnung ausgebildet. Erfindungsgemäß ist die Flanschanordnung gemäß einer der oben dargestellten Ausführungsformen ausgebildet. Antriebsstränge von Windkraftanlagen weisen typischerweise eine Größe auf, die eine aufwändige Wartung mit leistungsfähigem Hebezeug etc. erfordert. Dementsprechend bietet die beanspruchte Flanschanordnung eine besonders vorteilhafte Vereinfachung in der Handhabung derartiger Antriebsstränge bei deren Herstellung und Reparatur.

Die beschriebene Aufgabenstellung wird ebenfalls durch die erfindungsgemäß Windkraftanlage gelöst. Die Windkraftanlage weist einen Rotor auf, der drehbar an einer Gondel angebracht ist und mit einer Rotorwelle eines Antriebstrangs gekoppelt ist. Der Antriebsstrang ist dabei gemäß einer der oben skizzierten Ausführungsformen ausgebildet. In der erfindungsgemäßen Windkraftanlage erlaubt die Flanschanordnung eine einfache und platzsparende Montage und Demontage. Dies erlaubt aufgrund des geringen Freiraums in einer Gondel eine einfachere und damit schnellere Wartung der Windkraftanlage.

Des Weiteren wird die vorliegende Aufgabenstellung auch durch die erfindungsgemäße Industrie-Applikation gelöst. Die Industrie-Applikation umfasst eine Antriebseinheit, die beispielsweise als Elektromotor, Verbrennungsmotor oder Hydraulikmotor ausgebildet sein kann. Die Antriebseinheit stellt eine Antriebsleistung zur Verfügung, die über eine drehmomentübertragende Verbindung an ein Getriebe weitergegeben wird. Das Getriebe ist wiederum drehmomentübertragend mit einer Abtriebseinheit verbunden, für die die Antriebsleistung zur Verfügung gestellt wird. Die Abtriebseinheit kann als mechanische Anwendung ausgebildet sein, beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Die Verbindung zwischen dem Getriebe und der Antriebseinheit und/oder der Abtriebseinheit ist hierbei durch eine Flanschanordnung hergestellt. Erfindungsgemäß ist die Flanschanordnung nach einer der oben dargestellten Ausführungsformen ausgebildet. Beispielsweise kann so bei wartungsaufwendigen mechanischen Anwendungen, insbesondere Zuckermühlen, die Wartung des Getriebes vereinfacht werden und so die Wirtschaftlichkeit der Industrie-Applikation gesteigert werden. Bei zahlreichen Anwendungen, insbesondere bei Zuckermühlen, erfordert die Montage und Demontage mit der beanspruchten Flanschanordnung keine zusätzlichen Montageeinstellwerte.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch zwei kombinierte Halbschnitte einer ersten Ausführungsform der beanspruchten Flanschanordnung;
- FIG 2: schematisch einen Längsschnitt einer zweiten Ausführungsform der beanspruchten Flanschanordnung in einer Demontageposition;
- FIG 3: eine Schrägansicht einer Flanschnabe gemäß der ersten und zweiten Ausführungsform der Erfindung;
- FIG 4: eine Schrägansicht eines Arretierungsmittels gemäß der ersten und zweiten Ausführungsform der Erfindung;
- FIG 5: eine geschnittene Schrägansicht einer Ausführungsform einer erfindungsgemäßen Windkraftanlage;
- FIG 6: einen schematischen Aufbau einer Ausführungsform einer erfindungsgemäßen Industrie-Applikation.

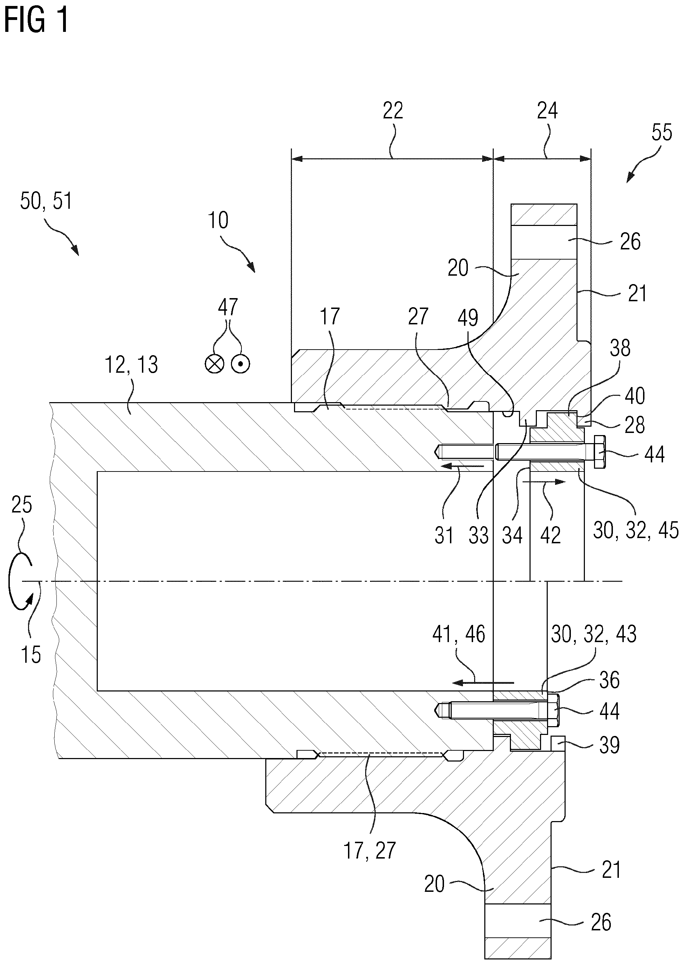

In FIG 1 sind zwei kombinierte Halbschnitte einer ersten Ausführungsform der beanspruchten Flanschanordnung 10 abgebildet. Die Flanschanordnung 10 umfasst eine Leistungswelle 12, die mit einer Flanschnabe 20 zusammenwirkt und um eine Drehachse 15 drehbar ist. In FIG 1 ist oberhalb der Drehachse 15 die Flanschanordnung 10 in einer Demontageposition 45 dargestellt und unterhalb der Drehachse 15 in einer Halteposition 43.

Die Leistungswelle 12, die als Antriebswelle oder Abtriebswelle eines nicht näher dargestellten Getriebes 50 oder Elektromotors 51 ausgebildet sein kann, ist als Hohlwelle 13 ausgebildet. Die Leistungswelle 12 ist mit einer Kurzverzahnung 17 versehen, die mit der korrespondierenden Kurzverzahnung 27 an einem Zylinderabschnitt 22 der Flanschnabe 20 kämmt. Durch die kämmenden Kurzverzahnungen 17, 27 wird eine Antriebsleistung 25 von der Leistungswelle 12 auf die Flanschnabe 20 übertragen. Ferner liegt zwischen der Flanschnabe 20 und der Leistungswelle 12 entlang einer Umfangsrichtung 47, die in FIG 1 sich in bzw. aus der Zeichenebene erstreckt, ein Verzahnungsspiel vor. Durch das Verzahnungsspiel wird ein Aufschieben der Flanschnabe 20 auf die Leistungswelle 12 vereinfacht. Die Flanschnabe 20 weist an einer umlaufenden Innenfläche 49 eine Stützschulter 33 auf, die auch umlaufend ausgebildet ist.

Die Flanschanordnung 10 umfasst auch ein Arretierungsmittel 30, das im Wesentlichen als Haltering ausgebildet ist, also einen Ringabschnitt 32 umfasst. Am Arretierungsmittel 30 sind Abstützsegmente 38 ausgebildet, zwischen denen jeweils ein lichter Bereich 39 ausgebildet ist. Die Abstützsegmente 38 des Arretierungsmittels 30 sind dazu ausgebildet, in einem montierten Zustand, also in einer Halteposition 43, auf die Stützschulter 33 zu einem axialen Abstützen 46 eine Haltekraft 41 auszuüben. Die Abstützsegmente 38 gehören dabei zu einer in FIG 1 mit unterbrochener Linie dargestellten Stirnseite 34 des Arretierungsmittels 30, die der Leistungswelle 12 zugewandt ist. Im Arretierungsmittel 30 sind Befestigungsmittel 44 aufgenommen, die als Schrauben ausgebildet sind. Die Befestigungsmittel 44 wirken mit der Leistungswelle 12 zusammen und üben so die Haltekraft 41 aus. Durch die Abstützsegmente 38 und die Stützschulter 33 wird die Haltekraft 41 im Wesentlichen flächig ausgeübt, wodurch statisch überbestimmte Lagerungen vermieden werden.

An den Zylinderabschnitt 22 schließt sich der Flanschabschnitt 24 der Flanschnabe 20 an, an der eine Flanschfläche 21 ausgebildet ist, in der wiederum Flanschbohrungen 26 ausgebildet sind. Über die Flanschbohrungen 26 ist die Flanschnabe 20 mit einer nicht näher dargestellten Maschine 55 drehmomentübertragend verbindbar. An der Innenseite 49 der Flanschnabe 20 sind auch Abstützsegmente 28 ausgebildet, die sich, auf die Drehachse 15 bezogen, radial nach außen erstrecken. Zwischen den Abstützsegmenten 28 der Flanschnabe 20 liegen, im Wesentlichen analog zu den Abstützsegmenten 38 des Arretierungsmittels 30, lichte Bereiche 29. Die Abstützsegmente 28 der Flanschnabe 20 gehören auf einer in FIG 1 rechts dargestellten Seite zu einer der Leistungswelle 12 abgewandten Stirnseite 36 des Arretierungsmittels 30. Das Arretierungsmittel 30 ist derart um die Drehachse 15 drehbar, dass sich die Abstützsegmente 28, 38 der Flanschnabe 20 und der Leistungswelle 12 gegenüberliegen. In diesem Fall liegt eine Demontageposition 45 für das Arretierungsmittel 30 vor. Durch ein Befestigungsmittel 44, das als Schraube ausgebildet ist und im Arretierungsmittel 30 aufgenommen ist, ist eine Stützkraft 31 auf die Leistungswelle 12 ausübbar, durch die das Arretierungsmittel 30 in Richtung der der Leistungswelle 12 abgewandten Stirnseite 36 gedrückt wird. Durch die gegenüberliegenden Abstützsegmente 28, 38 am Arretierungsmittel 30 und der Flanschnabe 20 wird eine Demontagekraft 42 auf die Flanschnabe 20 ausgeübt. Infolge der Demontagekraft 42 wird ein Abziehen der Flanschnabe 20 durchgeführt. Das Arretierungsmittel 30 vereint folglich zwei Funktionen, nämlich als Haltemittel im montierten Zustand, und als Demontagehilfsmittel der Flanschanordnung 10.

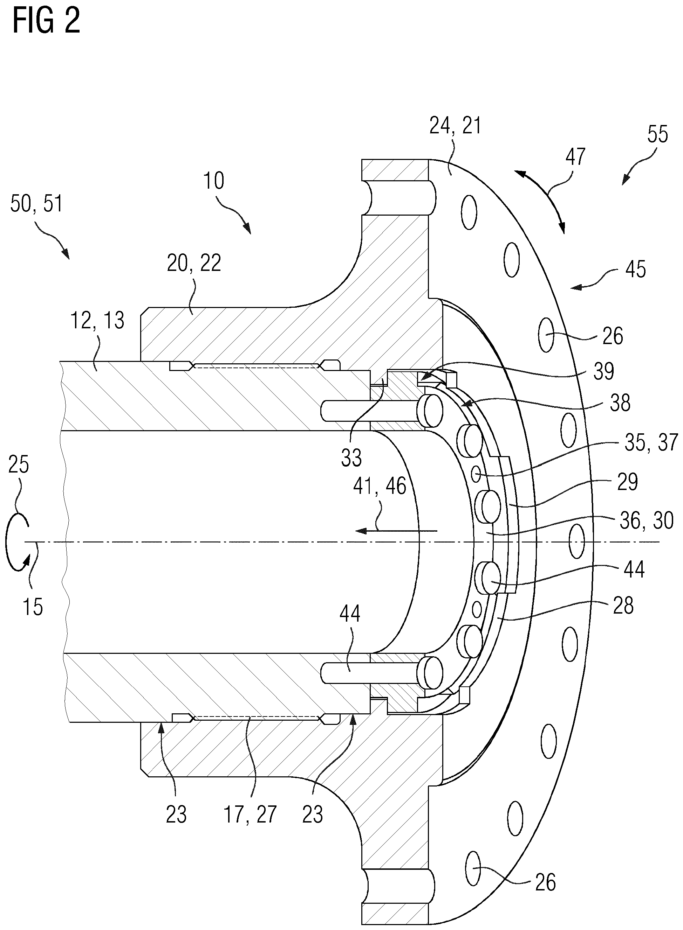

FIG 2 zeigt schematisch eine zweite Ausführungsform der beanspruchten Flanschanordnung 10 in einem Längsschnitt. Die Flanschanordnung 10 umfasst eine Leistungswelle 12, die zu einem nicht näher dargestellten Getriebe 50 oder Elektromotor 51 gehört. Auf der Leistungswelle 12, die als Hohlwelle 13 ausgebildet ist und um eine Drehachse 15 drehbar ist, ist eine Flanschnabe 20 angeordnet. Die Flanschnabe 20 weist an einem Zylinderabschnitt 22 eine Kurzverzahnung 27 auf, die in eine Kurzverzahnung 17 an der Leistungswelle 17 eingreift und so eine Antriebsleistung 25 überträgt. Dabei erfolgt eine Drehung in eine Umfangsrichtung 47. Durch die Kurzverzahnungen 17, 27 besteht zwischen der Flanschnabe 20 und der Leistungswelle 12 in Umfangsrichtung 47 ein Spiel. An den Zylinderabschnitt 22 schließt sich ein Flanschabschnitt 24 an, in dem eine Flanschfläche 21 mit einer Mehrzahl an Flanschbohrungen 26 ausgebildet sind. Durch den Flanschabschnitt 21 ist die Antriebsleistung 25 auf eine nicht näher gezeigte Maschine 55 übertragbar. Die Flanschnabe 20 ist ferner mit einem Zentriersitz 23 versehen, durch den die Flanschnabe 20 auf der Leistungswelle 12 ausgerichtet ist. An einer Innenseite 49 der Flanschnabe 20 ist eine umlaufende Stützschulter 33 ausgebildet, die gegen die Leistungswelle 12 abgestützt ist.

Die Flanschanordnung 10 weist auch ein Arretierungsmittel 30 auf, das im Wesentlichen als Haltering ausgebildet ist, also einen Ringabschnitt 32 umfasst. Im Arretierungsmittel 30 sind Befestigungsmittel 44 aufgenommen, die als Schrauben ausgebildet sind, aufgenommen, durch die das Arretierungsmittel 30 eine Haltekraft 41 auf die Stützschulter 33 ausübt. Hierdurch erfolgt ein axiales Andrücken 46 der Flanschnabe 20 an die Leistungswelle 12. Dabei liegen radial nach außenstehende Abstützsegmente 38 des Arretierungsmittels 38 im Wesentlichen flächig an der Leistungswelle 12 an, wodurch eine statisch überbestimmte Lagerung vermieden wird. Das Arretierungsmittel 30 ist, wenn die Befestigungsmittel 44 gelöst sind, um die Drehachse 15 drehbar. Dadurch können die Abstützsegmente 38 des Arretierungsmittels 30 gegenüber von Abstützsegmenten 28 der Flanschnabe 20, wie in FIG 2 gezeigt, gedreht werden. In diesem Fall kann durch das Arretierungsmittel 30 eine Demontagekraft 42 auf die Flanschnabe 20 ausgeübt werden, es liegt also eine Demontageposition 45 vor. Alternativ kann das Arretierungsmittel 30 in eine Halteposition 43 gedreht werden, in denen die Abstützsegmente 38 des Arretierungsmittels 30 lichten Bereichen 29 zwischen Abstützsegmenten 28 der Flanschnabe 20 gegenüberliegen und umgekehrt. In einer solchen Halteposition 43 ist das Arretierungsmittel 30 montierbar und auch geeignet, eine Haltekraft 41 auf die Stützschulter 33 auszuüben.

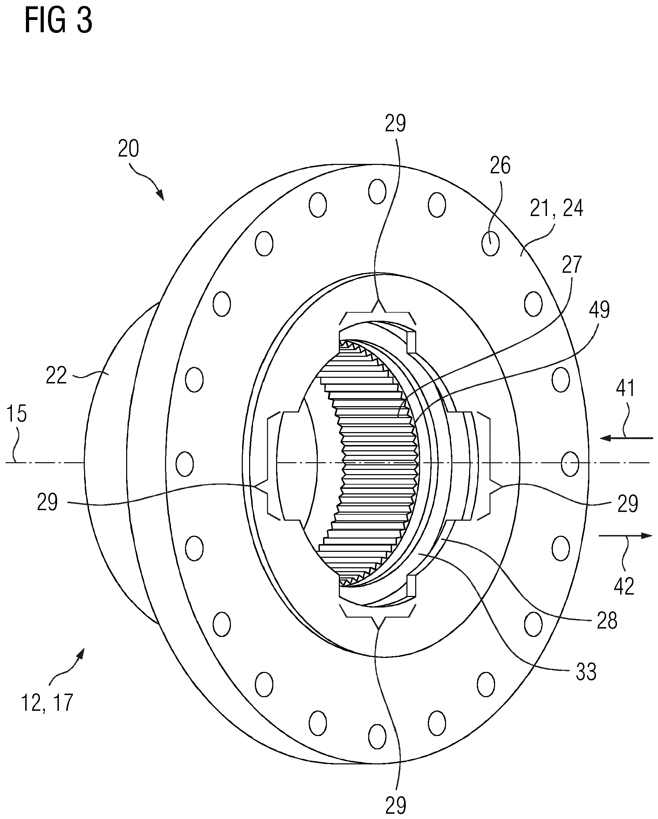

Des Weiteren ist in FIG 3 eine Flanschnabe 20 abgebildet, die in einer Flanschanordnung 10 beispielsweise gemäß FIG 1 oder FIG 2 einsetzbar ist. Die Flanschnabe 20 weist einen Zylinderabschnitt 22 und einen sich daran anschließenden Flanschabschnitt 24 mit einer Flanschfläche 21 und darin ausgebildeten Flanschbohrungen 26 auf. An einer Innenseite 49 der Flanschnabe 20 ist eine Kurzverzahnung 27 ausgebildet, die dazu geeignet ist, mit einer korrespondierenden Kurzverzahnung 17 an einer nicht näher gezeigten Leistungswelle 12 zu kämmen. Die Flanschnabe 20 ist durch die Kurzverzahnung 27 in der Lage, bei einer Drehung um eine Drehachse 15 Antriebsleistung 25 zu übertragen. Ferner ist an der Innenseite 49 der Flanschnabe 20 eine umlaufende Stützschulter 33 ausgebildet, über die eine Haltekraft 41 auf die Flanschnabe 20 ausübbar ist. Des Weiteren sind an der Flanschnabe 20, bezogen auf die Drehachse 15, radial nach innen stehende Abstützsegmente 28 ausgebildet, die im Wesentlichen ringsegmentförmig sind. Die Abstützsegmente 28 sind durch lichte Bereiche 29 zueinander beabstandet. Die Abstützsegmente 38 sind dazu geeignet, eine Demontagekraft 42 aufzunehmen, durch die ein Abziehen der Flanschnabe 20 von der nicht näher gezeigten Leistungswelle 12 zu ermöglichen oder zumindest zu unterstützen.

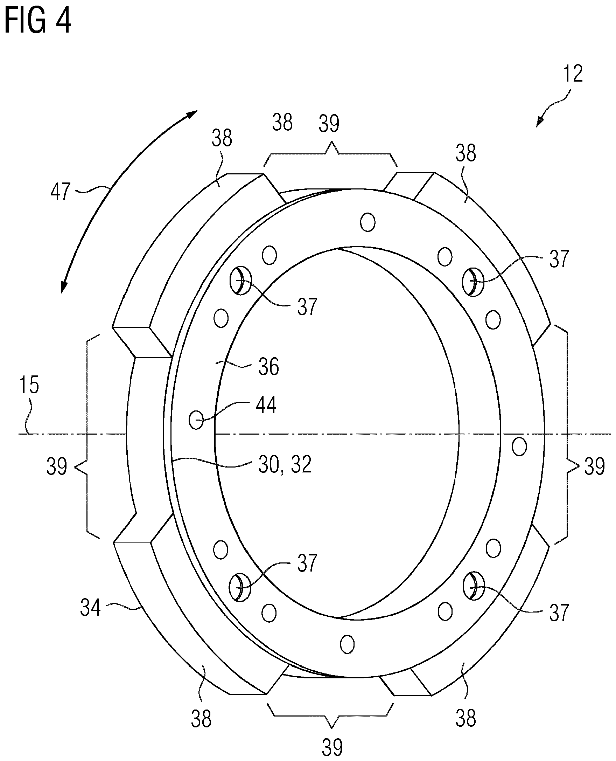

Ein Arretierungsmittel 30, das in den Ausführungsformen nach FIG 1 und FIG 2 einsetzbar ist, ist in FIG 4 in einer Schrägansicht dargestellt. Insbesondere ist das Arretierungsmittel 30 in Kombination mit einer Flanschnabe 20 nach FIG 3 einsetzbar. Das Arretierungsmittel 30 ist Haltering ausgebildet und umfasst einen Ringabschnitt 32. An den Ringabschnitt 32 sind im Wesentlichen in gleichmäßiger Winkelteilung Stützsegmente 38 angeformt. Die Abstützsegmente 38 sind im Wesentlichen ringsegmentförmig ausgebildet und stehen, bezogen auf eine Drehachse 15, radial nach außen ab. Die Abstützsegmente 38 sind in Umfangsrichtung 47 zueinander beabstandet, wobei zwischen den Abstützsegmenten 38 lichte Bereiche 39 ausgebildet sind. Ferner weist das Arretierungsmittel 30 zwei Stirnseiten 34, 36 auf. Eine dieser Stirnseiten 34 ist in einem montierten Zustand einer Leistungswelle 12 zugewandt und die gegenüberliegende Stirnseite 36 ist der Leistungswelle 12 abgewandt, weist als in Richtung deren freien Endes. Die Abstützsegmente 38 gehören mit ihren jeweiligen Seiten auch zu den entsprechenden Stirnflächen. Darüber hinaus sind im Arretierungsmittel 30 Bohrungen zur Aufnahme von nicht näher gezeigten Befestigungsmitteln 44 ausgebildet. Zusätzlich sind auch Bohrungen mit Bewegungsgewinden 37 am Arretierungsmittel 30 ausgebildet.

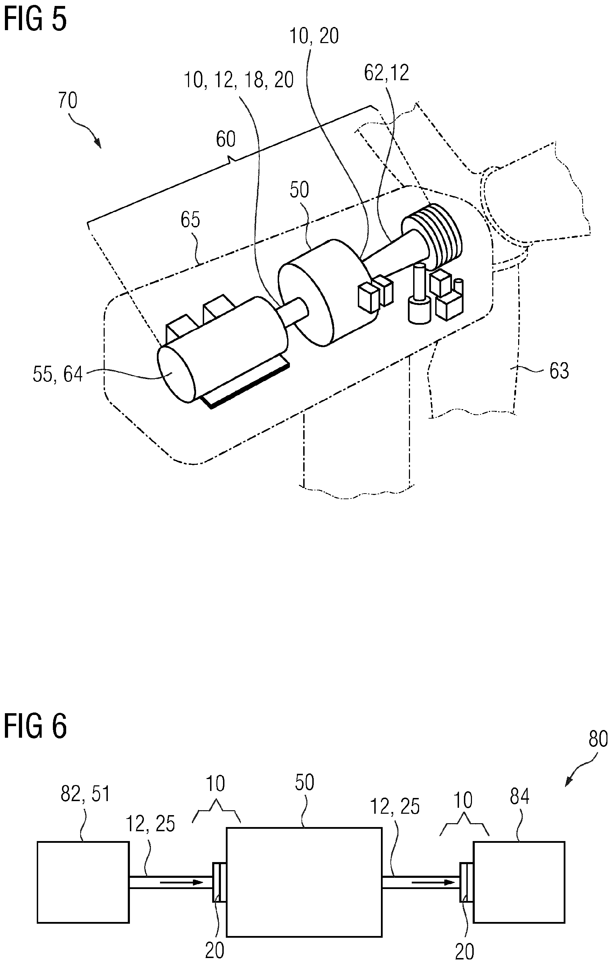

Ferner ist in FIG 5 eine Ausführungsform einer beanspruchten Windkraftanlage 70 dargestellt. Die Windkraftanlage 70 weist einen Rotor 63 auf, der an einer Gondel 65 drehbar angebracht ist. Der Rotor 63 ist mit einer Rotorwelle 62 verbunden, die als Leistungswelle 12 dient und durch die über ein Getriebe 50 ein Generator 64 angetrieben wird, der als Maschine 55 im Sinne der vorliegenden Lösung dient. Die Rotorwelle 63, das Getriebe 50 und der Generator 64 gehören zu einem Antriebsstrang 65 der Windkraftanlage 70, der in der Gondel 65 aufgenommen ist. Das Getriebe 50 ist über eine Flanschnabe 20 mit der Rotorwelle 62, die als Leistungswelle 12 aufzufassen ist, drehmomentübertragend verbunden. Die Rotorwelle 12 und die entsprechende Flanschnabe 20 gehören dabei zu einer Flanschanordnung 10 gemäß einer der oben dargestellten Ausführungsformen. Ferner ist das Getriebe 50 mit einer Leistungswelle 12 versehen, die als Vollwelle 18 ausgebildet ist und durch die die drehmomentübertragende Verbindung zum Generator 64 hergestellt ist. Die Leistungswelle 12, die zum Generator 64 führt, ist über eine Flanschnabe 20 mit dem Generator 64 gekoppelt. Die Leistungswelle 12 und die Flanschnabe 20, die den Generator 64 mit dem Getriebe 50 koppeln, gehören auch zu einer Flanschanordnung 10 gemäß einer der oben skizzierten Ausführungsformen.

FIG 6 zeigt schematisch den Aufbau einer beanspruchten Industrie-Applikation 80, die eine Antriebseinheit 82 und eine Abtriebseinheit 84 aufweist, die drehmomentübertragend über ein Getriebe 50 miteinander verbunden sind. Die Antriebseinheit 82 ist dazu ausgebildet, eine Antriebsleistung 25 bereitzustellen, die für den Betrieb der Abtriebseinheit 84 notwendig ist. Die Antriebseinheit 82 ist dazu als Elektromotor 51 ausgebildet. Die Abtriebseinheit 84 ist als mechanische Anwendung ausgebildet. Die Abtriebseinheit 84 ist dementsprechend ausgebildet, dass die Industrie-Applikation 80 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Das Getriebe 50 ist über eine Leistungswelle 12 und eine Flanschnabe 20 mit der Antriebseinheit 82 verbunden. Die Leistungswelle 12 ist hierbei eine Abtriebswelle des Elektromotors 51. Die Flanschnabe 20 und die Leistungswelle 12 gehören dabei zu einer Flanschanordnung 10 nach einer der oben dargestellten Ausführungsformen. Darüber hinaus ist das Getriebe 50 mit einer Leistungswelle 12 versehen, über die die Antriebsleistung 25 an die Abtriebseinheit 84 übertragen wird. Die Leistungswelle 12 ist hierzu mit einer Flanschnabe 20 gekoppelt, die zusammen mit der Leistungswelle 12 zu einer Flanschanordnung 10 nach einer der oben beschriebenen Ausführungsformen gehören. Ferner ist die Industrie-Applikation 80 nach FIG 6 mit einer Flanschanordnung 10 versehen, die an einer Ausgangsseite des Getriebes 50 angeordnet ist. Dadurch wird die Leistungswelle 12, die das Getriebe 50 mit der Abtriebseinheit 84 verbindet, an das Getriebe 50 angebunden.

## Patentansprüche

1. Flanschanordnung (10), umfassend eine Leistungswelle (12), eine damit lösbar verbundene Flanschnabe (20) und ein Arretierungsmittel (30), das zu einem lösbaren Halten der Flanschnabe (20) an der Leistungswelle (12) ausgebildet ist, **dadurch gekennzeichnet, dass** das Arretierungsmittel (30) zu einem Ausüben einer Demontagekraft (42) auf die Flanschnabe (20) drehbar um eine Drehachse (15) der Leistungswelle (12) ausgebildet ist, wobei am Arretierungsmittel (30) zumindest ein radial nach außen stehendes Abstützsegment (38) ausgebildet ist und/oder an der Flanschnabe (20) ein radial nach innen stehendes Abstützsegment (28) ausgebildet ist.

2. Flanschanordnung (10) nach Anspruch 1, **dadurch gekennzeichnet, dass** die Demontagekraft (42) entlang der Drehachse (15) der Leistungswelle (12) ausgerichtet ist.

3. Flanschanordnung (10) nach einem der Ansprüche 1 oder 2, **dadurch gekennzeichnet, dass** eine der Leistungswelle (12) zugewandte Stirnseite (34) des Arretierungsmittel (30) zu einem Ausüben einer Haltekraft (41) auf die Flanschnabe (20) ausgebildet ist und eine der Leistungswelle (12) abgewandte Stirnseite (36) des Arretierungsmittels (30) zu einem Ausüben der Demontagekraft (42) ausgebildet ist.

4. Flanschanordnung (10) nach einem der Ansprüche 1 bis 3, **dadurch gekennzeichnet, dass** das Arretierungsmittel (30) zwischen einer Halteposition (43) und einer Demontageposition (45) drehbar ausgebildet ist.

5. Flanschanordnung (10) nach einem der Ansprüche 1 bis 4, **dadurch gekennzeichnet, dass** an der Flanschnabe (20) und an der Leistungswelle (12) eine Kurzverzahnung (17, 27) ausgebildet ist, oder zwischen der Flanschnabe (20) und der Leistungswelle (12) ein Kegelsitz, ein zylindrischer Presssitz oder eine Welle-Nabe-Verbindung mit Passfederverbindung ausgebildet ist.

6. Flanschanordnung (10) nach einem der Ansprüche 1 bis 5, **dadurch gekennzeichnet, dass** die Demontagekraft (42) mittels mindestens eines Befestigungsmittels (44) auf die Flanschnabe (12) ausübbar ist, das im Arretierungsmittel (30) aufgenommen ist.

7. Flanschanordnung (10) nach einem der Ansprüche 1 bis 6, **dadurch gekennzeichnet, dass** die Leistungswelle (12) als Vollwelle (18) oder als Hohlwelle (13) ausgebildet ist.

8. Flanschanordnung (10) nach einem der Ansprüche 1 bis 7, **dadurch gekennzeichnet, dass** die Flanschnabe (20), einen Flanschabschnitt (24) und einen Zylinderabschnitt (22) mit einer Kurzverzahnung (27) und einer Stützschulter (33) zu einem axialen Abstützen (46) der Flanschnabe (20) an einer Leistungswelle (12) umfasst.

9. Flanschanordnung (10) nach einem der Ansprüche 1 bis 7, **dadurch gekennzeichnet, dass** die Arretierungsmittel (30), einen Ringkörper (32) mit einer Mehrzahl an Ausnehmungen zum Aufnehmen von Befestigungsmitteln (44) umfasst.

10. Getriebe (50), umfassend eine Leistungswelle (12), die als Antriebswelle oder als Abtriebswelle ausgebildet ist, und mit einer Flanschnabe (20) versehen ist, wobei die Flanschnabe (20) und die Leistungswelle (12) zu einer Flanschanordnung (10) gehören, **dadurch gekennzeichnet, dass** die Flanschanordnung (10) nach einem der Ansprüche 1 bis 7 ausgebildet ist.

11. Elektromotor (51), umfassend eine Leistungswelle (12), die als Abtriebswelle ausgebildet ist und die mit einer Flanschnabe (20) versehen ist, wobei die Flanschnabe (20) und die Leistungswelle (12) zu einer Flanschanordnung (10) gehören, **dadurch gekennzeichnet, dass** die Flanschanordnung (10) nach einem der Ansprüche 1 bis 7 ausgebildet ist.

12. Antriebsstrang (60) für eine Windkraftanlage (70), umfassend eine Rotorwelle (62), die drehmomentübertragend mit einem Getriebe (50) verbunden ist, das drehmomentübertragend mit einem Generator (64) verbunden ist, wobei eine Verbindung des Getriebes (50) mit dem Generator (64) und/oder der Rotorwelle (62) eine Flanschanordnung (10) umfasst, **dadurch gekennzeichnet, dass** die Flanschanordnung (10) nach einem der Ansprüche 1 bis 7 ausgebildet ist.

13. Windkraftanlage (70), umfassend einen Rotor (63), der drehbar an einer Gondel (65) angebracht ist, in der ein Antriebsstrang (60) aufgenommen ist, **dadurch gekennzeichnet, dass** der Antriebsstrang (60) nach Anspruch 12 ausgebildet ist.

14. Industrie-Applikation (80), umfassend eine Antriebseinheit (82) und eine Abtriebseinheit (84), die jeweils drehmomentübertragend mit einem Getriebe (50) verbunden sind, wobei eine Verbindung zwischen dem Getriebe (50) und der Antriebseinheit (82) und/oder der Abtriebseinheit (84) eine Flanschanordnung (10) umfasst, **dadurch gekennzeichnet, dass** die Flanschanordnung (10) nach einem der Ansprüche 1 bis 7 ausgebildet ist.

## Claims

1. Flange arrangement (10), comprising a power shaft (12), a flanged hub (20) detachably connected thereto and a locking means (30), which is designed to detachably hold the flanged hub (20) on the power shaft (12), **characterized in that** the locking means (30) is designed to exert a disassembly force (42) on the flanged hub (20) so that it can rotate about an axis of rotation (15) of the power shaft (12), wherein at least one radially outwardly projecting supporting segment (38) is formed on the locking means (30) and/or a radially inwardly projecting supporting segment (28) is formed on the flanged hub (20).

2. Flange arrangement (10) according to Claim 1, **characterized in that** the disassembly force (42) is oriented along the axis of rotation (15) of the power shaft (12).

3. Flange arrangement (10) according to either of Claims 1 and 2, **characterized in that** a front face (34) of the locking means (30) that faces the power shaft (12) is designed to exert a holding force (41) on the flanged hub (20), and a front face (36) of the locking means (30) that faces away from the power shaft (12) is designed to exert the disassembly force (42).

4. Flange arrangement (10) according to one of Claims 1 to 3, **characterized in that** the locking means (30) is designed to be rotatable between a holding position (43) and a disassembly position (45).

5. Flange arrangement (10) according to one of Claims 1 to 4, **characterized in that** an involute spline (17, 27) is formed on the flanged hub (20) and on the power shaft (12), or a tapered seat, a cylindrical press fit or a shaft-hub connection with a key connection is formed between the flanged hub (20) and the power shaft (12).

6. Flange arrangement (10) according to one of Claims 1 to 5, **characterized in that** the disassembly force (42) can be exerted on the flanged hub (12) by means of at least one fixing means (44) which is accommodated in the locking means (30).

7. Flange arrangement (10) according to one of Claims 1 to 6, **characterized in that** the power shaft (12) is formed as a solid shaft (18) or as a hollow shaft (13).

8. Flange arrangement (10) according to one of Claims 1 to 7, **characterized in that** the flanged hub (20) comprises a flange section (24) and a cylinder section (22) having an involute spline (27) and a supporting shoulder (33) for axially supporting (46) the flanged hub (20) on a power shaft (12).

9. Flange arrangement (10) according to one of Claims 1 to 7, **characterized in that** the locking means (30) comprises an annular body (32) with a plurality of cutouts for receiving fixing means (44).

10. Gearbox (50), comprising a power shaft (12), which is designed as a drive shaft or as an output shaft and is provided with a flanged hub (20), wherein the flanged hub (20) and the power shaft (12) belong to a flange arrangement (10), **characterized in that** the flange arrangement (10) is designed according to one of Claims 1 to 7.

11. Electric motor (51), comprising a power shaft (12), which is designed as an output shaft and is provided with a flanged hub (20), wherein the flanged hub (20) and the power shaft (12) belong to a flange arrangement (10), **characterized in that** the flange arrangement (10) is designed according to one of Claims 1 to 7.

12. Drive train (60) for a wind turbine (70), comprising a rotor shaft (62) which is connected in a torque-transmitting manner to a gearbox (50), which is connected in a torque-transmitting manner to a generator (64), wherein a connection of the gearbox (50) to the generator (64) and/or the rotor shaft (62) comprises a flange arrangement (10), **characterized in that** the flange arrangement (10) is designed according to one of Claims 1 to 7.

13. Wind turbine (70), comprising a rotor (63) which is rotatably attached to a nacelle (65), in which a drive train (60) is accommodated, **characterized in that** the drive train (60) is designed according to Claim 12.

14. Industrial application (80), comprising a drive unit (82) and an output unit (84), which are each connected in a torque-transmitting manner to a gearbox (50), wherein a connection between the gearbox (50) and the drive unit (82) and/or the output unit (84) comprises a flange arrangement (10), **characterized in that** the flange arrangement (10) is designed according to one of Claims 1 to 7.

## Revendications

1. Agencement de bride (10), comprenant un arbre de puissance (12), un moyeu à bride (20) relié à celui-ci de manière libérable et un moyen d'arrêt (30) qui est réalisé pour une retenue libérable du moyeu à bride (20) sur l'arbre de puissance (12), **caractérisé en ce que** le moyen d'arrêt (30) est réalisé de manière à pouvoir tourner autour d'un axe de rotation (15) de l'arbre de puissance (12) pour exercer une force de démontage (42) sur le moyeu à bride (20), au moins un segment de support (38) s'étendant radialement vers l'extérieur étant réalisé sur le moyen d'arrêt (30) et/ou un moyen de support (28) s'étendant radialement vers l'intérieur étant réalisé sur le moyeu à bride (20).

2. Agencement de bride (10) selon la revendication 1, **caractérisé en ce que** la force de démontage (42) est orientée le long de l'axe de rotation (15) de l'arbre de puissance (12).

3. Agencement de bride (10) selon l'une des revendications 1 ou 2, **caractérisé en ce qu'**un côté frontal (34), tourné vers l'arbre de puissance (12), du moyen d'arrêt (30) est réalisé pour exercer une force de retenue (41) sur le moyeu à bride (20) et un côté frontal (36), opposé à l'arbre de puissance (12), du moyen d'arrêt (30) est réalisé pour exercer la force de démontage (42).

4. Agencement de bride (10) selon l'une des revendications 1 à 3, **caractérisé en ce que** le moyen d'arrêt (30) est disposé de manière à pouvoir tourner entre une position de retenue (43) et une position de démontage (45).

5. Agencement de bride (10) selon l'une des revendications 1 à 4, **caractérisé en ce qu'**une denture tronquée (17, 27) est réalisée sur le moyeu à bride (20) et sur l'arbre de puissance (12), ou un siège conique, un ajustement serré cylindrique ou une liaison arbre-moyeu à assemblage par clavette parallèle est réalisé(e) entre le moyeu à bride (20) et l'arbre de puissance (12).

6. Agencement de bride (10) selon l'une des revendications 1 à 5, **caractérisé en ce que** la force de démontage (42) peut être exercée sur le moyeu à bride (12) au moyen d'au moins un moyen de fixation (44) qui est reçu dans le moyen d'arrêt (30).

7. Agencement de bride (10) selon l'une des revendications 1 à 6, **caractérisé en ce que** l'arbre de puissance (12) est réalisé sous forme d'arbre plein (18) ou sous forme d'arbre creux (13).

8. Agencement de bride (10) selon l'une des revendications 1 à 7, **caractérisé en ce que** le moyeu à bride (20) comprend une partie bride (24) et une partie cylindrique (22) dotée d'une denture tronquée (27) et d'un épaulement de support (33) pour un support axial (46) du moyeu à bride (20) sur un arbre de puissance (12) .

9. Agencement de bride (10) selon l'une des revendications 1 à 7, **caractérisé en ce que** le moyen d'arrêt (30) comprend un corps annulaire (32) doté d'une pluralité d'évidements pour recevoir des moyens de fixation (44).

10. Transmission (50), comprenant un arbre de puissance (12), qui est réalisé sous forme d'arbre d'entraînement ou sous forme d'arbre de sortie, et est doté d'un moyeu à bride (20), le moyeu à bride (20) et l'arbre de puissance (12) appartenant à un agencement de bride (10), **caractérisée en ce que** l'agencement de bride (10) est réalisé selon l'une des revendications 1 à 7.

11. Moteur électrique (51), comprenant un arbre de puissance (12), qui est réalisé sous forme d'arbre de sortie et qui est doté d'un moyeu à bride (20), le moyeu à bride (20) et l'arbre de puissance (12) appartenant à un agencement de bride (10), **caractérisé en ce que** l'agencement de bride (10) est réalisé selon l'une des revendications 1 à 7.

12. Chaîne cinématique (60) pour une éolienne (70), comprenant un arbre de rotor (62), qui est relié à une transmission (50) de manière à transmettre un couple, qui est reliée à un générateur (64) de manière à transmettre un couple, une liaison de la transmission (50) au générateur (64) et/ou à l'arbre de rotor (62) comprenant un agencement de bride (10), **caractérisée en ce que** l'agencement de bride (10) est réalisé selon l'une des revendications 1 à 7.

13. Éolienne (70), comprenant un rotor (63), qui est installé de manière à pouvoir tourner sur une nacelle (65) dans laquelle est reçue une chaîne cinématique (60), **caractérisée en ce que** la chaîne cinématique (60) est réalisée selon la revendication 12.

14. Application industrielle (80), comprenant une unité d'entraînement (82) et une unité de sortie (84), qui sont reliées respectivement à une transmission (50) de manière à transmettre un couple, une liaison entre la transmission (50) et l'unité d'entraînement (82) et/ou l'unité de sortie (84) comprenant un agencement de bride (10), **caractérisée en ce que** l'agencement de bride (10) est réalisé selon l'une des revendications 1 à 7.
